# EUROPÄISCHE PATENTSCHRIFT

(11) **EP 0 510 724 B1**
(45) Veröffentlichungstag und Bekanntmachung des Hinweises auf die Patenterteilung: **01.03.1995**
(21) Anmeldenummer: 92109887.7
(22) Anmeldetag: 21.11.1987
(51) Int. Cl.: F16F 1/38, F16F 13/00

(54) **Hülsengummifeder**
Bushing-type rubber spring
Ressort du type à manchon en caoutchouc

(30) Priorität: 23.07.1987 DE 3724431
(43) Veröffentlichungstag der Anmeldung: 28.10.1992
(62) Teilanmeldung aus: 87117199.7
(73) Patentinhaber: Firma Carl Freudenberg, 69469 Weinheim (DE)
(72) Erfinder: Hamaekers, Arno, W-6946 Gorxheimertal (DE); Rudolph, Axel, W-6140 Bensheim (DE)

(56) Entgegenhaltungen:
- EP-A- 0 147 662
- DE-A- 2 748 193
- FR-A- 2 434 965
- US-A- 2 719 017
- PATENT ABSTRACTS OF JAPAN vol. 10, no. 73 (M-463)(2130) 22. März 1986 & JP-A-60 215 135 (MAZDA K.K.) 28. Oktober 1985

## Beschreibung

Die Erfindung betrifft eine Hülsengummifeder nach dem Oberbegriff von Anspruch 1.

Eine solche Hülsengummifeder ist aus der DE-OS 27 48 193 bekannt. Sie gelangt insbesondere im Bereich der Achsaufhängung eines Kraftfahrzeuges zur Anwendung und soll eine Kompensation der bei schneller Kurvenfahrt auftretenden Übersteuerungsneigung bewirken. Zur Erreichung dieses Zwecks ist der Gummikörper - bezogen auf die Lagerachse - asymetrisch ausgebildet, z.B. sind die den Federkörper bildenden Wandteile gleichsinnig geneigt und in axialer Richtung beiderseits durch ebene Stirnflächen begrenzt, die sich parallel zueinander erstrecken. Die mit der Hülsengummifeder erzielten Ergebnisse sind indessen noch nicht völlig zufriedenstellend.

Der Erfindung liegt die Aufgabe zugrunde, eine solche Hülsengummifeder derart weiterzuentwickeln, daß sich bei der Kurvenfahrt eine deutlich verbesserte Radführung ergibt und eine weitgehende Beseitigung der Übersteuerung. Gedacht ist hierbei insbesondere an eine Verwendung der Hülsengummifeder bei Verbund- oder Koppellenkerachsen oder auch an Längslenker mit zwei aufbauseitigen Lagerstellen.

Diese Aufgabe wird erfindungsgemäß mit den kennzeichnenden Merkmalen des unabhängigen Anspruchs 1 oder 5 gelöst. Auf vorteilhafte Ausgestaltung nehmen die Unteransprüche 2 bis 4 sowie 6 Bezug.

Bei der erfindungsgemäßen Hülsengummifeder sind die Stirnflächen beider Wandteile zur Längsachse entgegengesetzt geneigt und hohlkegelig gestaltet.

Das an der inneren Stützhülse befestigte Anschlußteil erfährt hierdurch bei Einleitung axialgerichteter Kräfte auch außerhalb der konstruktionsgewollten Ausweichrichtung eine gute Führung, was maßgeblich dazu beiträgt, indifferente Ausweichbewegungen der inneren Stützhülse zu unterdrücken. Sowohl hinsichtlich der Richtung als auch hinsichtlich der Größe der gewollten Ausweichbewegungen lassen sich diese bei Einleitung längsgerichteter Kräfte sehr exakt vorherbestimmen und auch unter ungünstigen Anwendungsbedingungen gewährleisten.

Die Wandteile umschließen die innere Stützhülse maximal auf ihrem halben Umfang und gewährleisten eine ganz besonders gute Führung.

Im Hinblick auf eine Modifizierung der Nachgiebigkeit der beiden Wandteile ist es möglich, voneinander abweichende Werkstoffe zu ihrer Herstellung zu verwenden. Die Wandteile können jedoch auch aus übereinstimmenden Werkstoffen bestehen, wenn die Wandteile der Achse der inneren Stützhülse unter voneinander abweichenden Winkeln zugeordnet sind.

Eine weitere Möglichkeit, die Nachgiebigkeit der Wandteile in bezug aufeinander zu modifizieren besteht darin, sie axial gegeneinander verschoben anzubringen. Auch können die Wandteile eine voneinander abweichende Länge in axialer Richtung haben.

Anspruch 5 nimmt bezug auf eine Ausführung bei der die Wandteile von ähnlich gewendelter Gestalt sind wie die Gänge eines zweigängigen Gewindes. Entsprechende Ausführungen eignen sich auch im Hinblick auf die Verminderung von Seitenneigungen, die sich bei der schnellen Kurvenfahrt eines Kraftfahrzeuges ergeben können.

Ausführungsbeispiele der Erfindung werden nachfolgend anhand der Zeichnungen verdeutlicht. Es zeigen:
- Figur 1: eine Hülsengummifeder, bei der die beiden Wandteile entgegengesetzt geneigt sind und eine voneinander verschiedene Länge haben.
- Figur 2: eine Ausführung ähnlich Figur 1, bei der die beiden Wandteile axial gegeneinander verschoben angebracht sind.
- Figur 3: eine Ausführung, bei der die beiden Wandteile von ähnlicher Gestalt sind wie die Gänge eines zweigängigen Gewindes.

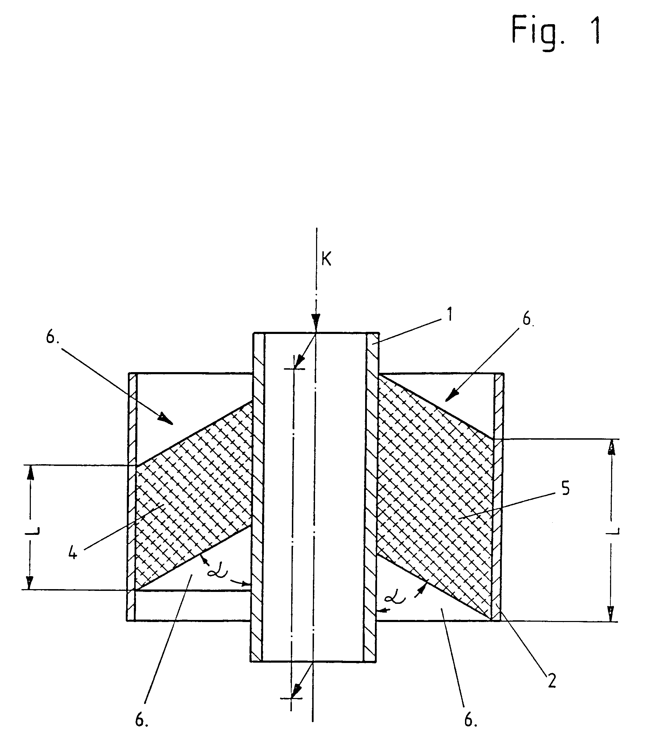

Die bei den Ausführungen nach den Figuren 1 bis 3 zur Anwendung gelangenden Federkörper aus Gummi haben voneinander abweichende Profile. Die Dämpfungseinrichtung und die Art der Vorspannung wurde in allen diesen Fällen nicht gezeigt.

Die in Figur 1 gezeigte Hülsengummifeder umfaßt zwei einander in achsparalleler Zuordnung umschließenden Stützhülsen 1, 2, die durch einen Federkörper aus gummielastischem Werkstoff aufeinander abgestützt sind, wobei der Federkörper zwei schräg zur Längsachse verlaufende Wandteile 4, 5 umfaßt, die aufeinander gegenüberliegenden Seiten der inneren Stützhülse 1 angeordnet sind. Die Wandteile 4, 5 sind innen- und außenseitig durch Vulkanisierung an den Stützhülsen 1, 2 festgelegt und bilden mit diesen zusammen eine unlösbar in sich geschlossene Baueinheit. (Die Stirnflächen beider Wandteile sind hohlkegelig gestaltet und entgegengesetzt geneigt).

Die Stützhülsen 1, 2 sind im Normalzustand einander koaxial zugeordnet und durch die beiden Wandteile 4, 5 verbunden. Die beiden Wandteile 4, 5 sind einander gegenüberliegend in dem Zwischenraum zwischen den beiden Stützhülsen 1, 2 angeordnet und jeweils von hohlkegeliger Gestalt. Die sie in axialer Richtung begrenzenden Stirnflächen 6 sind dementsprechend hohlkegelig gewölbt. Bei Einleitung einer axial gerichteten Kraft in die innere Stützhülse 1 ergibt sich dadurch eine Relativverlagerung dieser Stützhülse 1, die durch Pfeile und eine strichpunktierte Linie angedeutet ist.

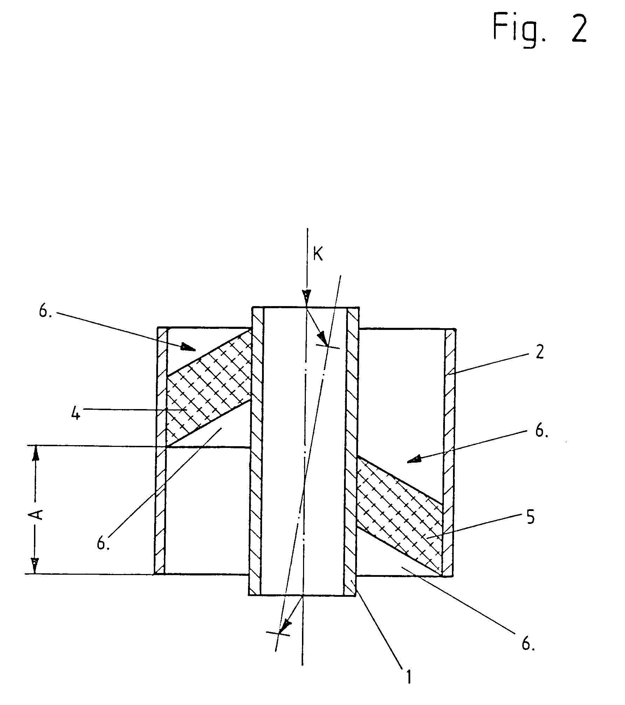

Die in Figur 2 gezeigte Ausführung ist ähnlich wie die vorstehend beschriebene gestaltet und auch bei dieser Ausführung wird der Federkörper durch zwei in axialer Richtung durch hohlkegelige Stirnflächen begrenzte Wandteile gebildet, welche eine entgegengesetzte Neigungsrichtung haben und in den Zwischenraum der innen- und der äußeren Stützhülsen 1, 2 einvulkanisiert sind. Die Wandteile 4, 5 sind indessen in axialer Richtung gegeneinander verschoben, was zu einer relativen Verkantung der inneren Stützhülse 1 in bezug auf die äußere Stützhülse 2 bei Einleitung einer axialgerichteten Kraft K in die innere Stützhülsen 1 führt.

Auch in diesem Falle ergibt sich somit eine von der Belastungsrichtung gewollt abweichende Richtung der Ausweichbewegung des Federkörpers 1, welche sowohl hinsichtlich ihrer Größe als auch hinsichtlich ihrer Richtung präzise vorherbestimmbar ist.

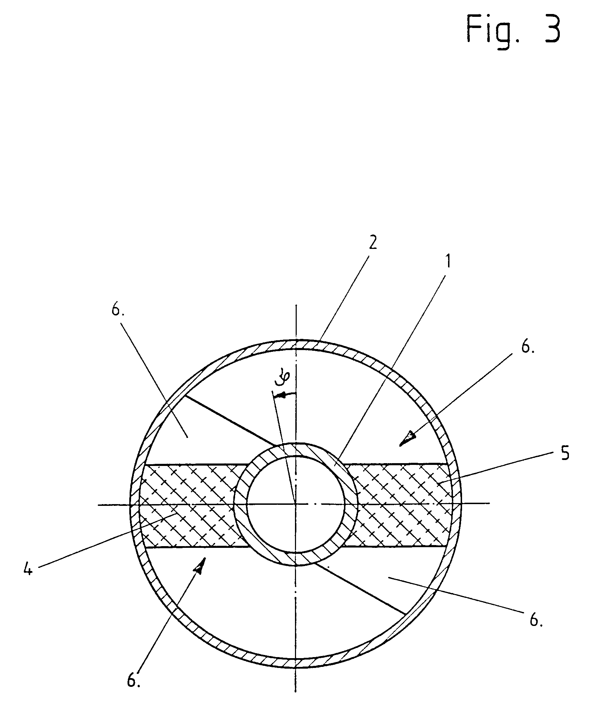

Die Ausführung nach Figur 3 unterscheidet sich von den vorstehend beschriebenen dadurch, daß der zweigeteilte Federkörper von ähnlicher Gestalt ist wie die Gänge eines zweigängigen Gewindes. Die Wandteile 4, 5 sind dementsprechend von gewendelter Gestalt und verbinden die innere Stützhülse 1 mit der äußeren Stützhülse 2. Die die Wandteile in Umfangsrichtung begrenzenden Stirnflächen 6 erstrecken sich parallel zueinander und sind in sich gewölbt. Bei Einleitung einer axialgerichteten Kraft, beispielsweise senkrecht zur Zeichenebene, in die innere Stützhülse 1 ergibt sich dadurch eine Relativverdrehung derselben, welche durch den eingezeichneten Pfeil angedeutet ist. Die resultierende Ausweichbewegung hat somit auch in diesem Falle eine von der Richtung der eingeleiteten Kraft abweichende Richtung. Auch diese Ausführung der erfindungsgemäßen Hülsengummifeder läßt sich dadurch ausgezeichnet zur Aktivierung belastungsbedingter Lenkbewegungen benutzen.

## Patentansprüche

1. Hülsengummifeder, umfassend zwei einander in achsparalleler Zuordnung umschließende Stützhülsen (1, 2), die durch einen Federkörper aus gummielastischem Werkstoff aufeinander abgestützt sind, wobei der Federkörper zwei schräg zur Längsachse verlaufende Wandteile (4, 5) umfaßt, die durch zwei sich parallel zueinander erstreckende Stirnflächen (6) begrenzt und auf einander gegenüberliegenden Seiten der inneren Stützhülse (1) angeordnet sind, dadurch gekennzeichnet, daß die Stirnflächen (6) beider Wandteile (4, 5) zur Längsachse entgegengesetzt geneigt und hohlkegelig gestaltet sind.

2. Hülsengummifeder nach Anspruch 1, dadurch gekennzeichnet, daß die Wandteile (4, 5) eine voneinander abweichende Nachgiebigkeit haben.

3. Hülsengummifeder nach Anspruch 1 bis 2, dadurch gekennzeichnet, daß die Wandteile (4, 5) um ein Maß A axial gegeneinander verschoben angebracht sind.

4. Hülsengummifeder nach Anspruch 2 bis 3, dadurch gekennzeichnet, daß die Wandteile (4, 5) eine voneinander abweichende Länge (L) in axialer Richtung haben.

5. Hülsengummifeder, umfassend zwei einander in achsparalleler Zuordnung umschließenden Stützhülsen (1, 2), die durch einen Federkörper aus gummielastischem Werkstoff aufeinander abgestützt sind, wobei der Federkörper zwei schräg zur Längsachse verlaufende Wandteile (4, 5) umfaßt, die durch zwei sich parallel zueinander erstreckende Stirnflächen (6) begrenzt und aufeinander gegenüberliegenden Seiten der inneren Stützhülse (1) angeordnet sind, dadurch gekennzeichnet, daß die Wandteile (4, 5) von ähnlich gewendelter Gestalt sind wie die Gänge eines zweigängigen Gewindes.

6. Hülsengummifeder nach Anspruch 1 bis 5, dadurch gekennzeichnet, daß die Wandteile (4, 5) gemeinsam mit sie verbindenden, stirnseitigen Abschlußwänden der Stützhülsen (1, 2) wenigstens zum Teil flüssigkeitsgefüllte Kammern begrenzen, die wenigstens teilweise durch Verbindungsöffnungen verbunden sind.

## Claims

1. A sleeve-type rubber spring, comprising two supporting sleeves (1, 2), which enclose one another in axially parallel arrangement and are supported one on top of the other by a spring body made from elastomeric material, the spring body comprising two wall parts (4, 5) which run obliquely to the longitudinal axis, are limited by two end faces (6) extending parallel to one another and are disposed on opposite sides of the inner supporting sleeve (1) to one another, characterised in that the end faces (6) of both wall parts (4, 5) are inclined oppositely to the longitudinal axis and are shaped like a hollow cone.

2. A sleeve-type rubber spring according to claim 1, characterised in that the wall parts (4, 5) have a resilience differing from one another.

3. A sleeve-type rubber spring according to either of claims 1 and 2, characterized in that the wall parts (4, 5) are fitted such that they are offset from one another in the axial direction by a measure A.

4. A sleeve-type rubber spring according to either of claims 2 and 3, characterized in that the wall parts (4, 5) have a length (L) in the axial direction different from one another.

5. A sleeve-type rubber spring, comprising two supporting sleeves (1, 2), which enclose one another in axially parallel arrangement and are supported one on top of the other by a spring body made from elastomeric material, the spring body comprising two wall parts (4, 5) which run obliquely to the longitudinal axis, are limited by two end faces (6) extending parallel to one another and are disposed on opposite sides of the inner supporting sleeve (1) to one another, characterized in that the wall parts (4, 5) are of similarly coiled shape like the turns of a double thread.

6. A sleeve-type rubber spring according to any of claims 1 to 5, characterized in that the wall parts (4, 5), jointly with end-sided extremity walls, which connect them, of the supporting sleeves (1, 2), delimit at least partially liquid-filled chambers, which are connected at least partially by connecting openings.

## Revendications

1. Ressort du type à manchon en caoutchouc, comportant deux manchons d'appui (1, 2) disposés l'un dans l'autre dans une relation parallèle à l'axe et qui sont appuyés l'un sur l'autre par un corps formant ressort constitué d'un matériau ayant l'élasticité du caoutchouc, ce corps formant ressort comportant deux parties de paroi (4, 5) orientées en oblique par rapport à l'axe longitudinal, délimitées par deux surfaces frontales (6) s'étendant parallèlement l'une à l'autre et disposées sur des côtés mutuellement opposés du manchon intérieur d'appui (1) caractérisé en ce que les surfaces frontales (6) des deux parties de paroi (4, 5) sont inclinées dans des sens opposés par rapport à l'axe longitudinal et sont agencées en forme de cône creux.

2. Ressort du type à manchon en caoutchouc selon la revendication 1, caractérisé en ce que les parties de paroi (4, 5) ont des souplesses différant l'une de l'autre.

3. Ressort du type à manchon en caoutchouc selon une des revendications 1 ou 2, caractérisé en ce que les parties de paroi (4, 5) sont décalées axialement l'une par rapport à l'autre d'une dimension A.

4. Ressort du type à manchon en caoutchouc selon une des revendications 2 ou 3, caractérisé en ce que les parties de paroi (4, 5) ont dans une direction axiale des longueurs (L) qui diffèrent l'une de l'autre.

5. Ressort du type à manchon en caoutchouc comportant deux manchons d'appui (1, 2) disposés l'un dans l'autre dans une relation parallèle à l'axe et qui sont appuyés l'un sur l'autre par un corps formant ressort constitué d'un matériau ayant l'élasticité du caoutchouc, ce corps formant ressort comportant deux parties de paroi (4, 5) orientées en oblique par rapport à l'axe longitudinal, délimitées par deux surfaces frontales (6) s'étendant parallèlement l'une à l'autre et disposées sur des côtés mutuellement opposés du manchon intérieur d'appui (1), caractérisé en ce que les parties (4, 5) ont une forme de spirale analogue à celle des filets d'un filetage à deux filets.

6. Ressort du type à manchon en caoutchouc selon une des revendications 1 à 5, caractérisé en ce que les parties de paroi (4, 5) délimitent, en coopération avec des parois d'obturation, assurant leur liaison et situées du côté frontal, des manchons d'appui (1, 2), au moins en partie des chambres remplies de liquide, qui sont reliées au moins partiellement par des ouvertures de liaison.
